# EUROPEAN PATENT APPLICATION

(11) **EP 4 831 233 A1**
(43) Date of publication of application: **28.10.2026**
(21) Application number: 24908182.9
(22) Date of filing: 20.12.2024
(51) Int. Cl.: C08L 23/04, C08L 23/0807

(54) **POLYETHYLENE COMPOSITION**

(30) Priority: 21.12.2023 KR 20230188267
(71) Applicant: LG Chem, Ltd., Seoul 07336 (KR)
(72) Inventor: SEO, Jin Seok, Daejeon 34122 (KR); KIM, Jeongsik, Daejeon 34122 (KR); HONG, Bog Ki, Daejeon 34122 (KR); KIM, Daehwan, Daejeon 34122 (KR)
(74) Representative: Goddar, Heinz J.
(86) International application number: PCT/KR2024/020857
(87) International publication number: WO 2025/135900

(57) **Abstract**

Provided is a polyethylene composition comprising virgin polyethylene (Virgin PE) and post-consumer waste polyethylene (PCW PE), which has improved environmental stress crack resistance along with excellent mechanical properties.

## Description

### [TECHNICAL FIELD]

### CROSS-REFERENCE TO RELATED APPLICATION(S)

This application is based on, and claims priority from, Korean Patent Application Nos. 10-2023-0188267 and 10-2024-0192758, filed on December 21, 2023 and December 20, 2024, in the Korean Intellectual Property Office, respectively, the disclosures of which are hereby incorporated by reference herein in their entirety.

The present disclosure relates to a polyethylene composition comprising virgin polyethylene (Virgin PE) and post-consumer waste polyethylene (PCW PE). In particular, the present disclosure provides a polyethylene composition having improved environmental stress crack resistance along with excellent mechanical properties.

### [BACKGROUND]

The demand for polyethylene resins is continuously increasing and they are used in various application fields.

Recently, with increasing concern for the environment, regulations to curb carbon dioxide emissions have been strengthened, and in particular, as environmental pollution resulting from the increased use of plastics has become a serious issue, regulations at the manufacturing stage have been enhanced, such as the mandatory use of recycled resin mainly in the United States. Accordingly, manufacturers are required to add a certain amount or more of recycled resin during the manufacture of resin molded articles, and the recycled resin content is graded with respect to eco-friendliness.

However, since recycled resin is already a processed resin, its properties change during high-temperature processing, resulting in a significant reduction in impact strength, tensile strength, chemical resistance, and thermal stability compared to conventional virgin (VIRGIN) resins. In order to solve these problems, an approach has been attempted wherein the composition containing recycled resin comprises a certain or higher amount of virgin resin. However, in order to minimize the degradation of mechanical properties by this approach, an excessive amount of virgin resin is necessary, and major property degradation problems such as the reduction of environmental stress cracking resistance (ESCR) still remain unresolved. Moreover, these problems become even more serious as the number of processing recycles increases.

### [DETAILED DESCRIPTION OF THE INVENTION]

### [Technical Problem]

There is provided a polyethylene composition comprising virgin polyethylene (Virgin PE) and post-consumer waste polyethylene (PCW PE) that can deliver improved environmental stress crack resistance (ESCR) along with excellent mechanical properties.

### [Technical Solution]

According to one embodiment of the present disclosure, there is provided a polyethylene composition comprising virgin polyethylene (Virgin PE) and post-consumer waste polyethylene (PCW PE) that satisfies the following (a) to (c):
(a) a density of at least 0.949 g/cm³;
(b) a dart drop impact strength of at least 7 drops, as measured in accordance with Dart Drop Method A of ASTM D 1709 by dropping a weight onto a disc specimen of the polyethylene composition having a diameter of 50 mm and a thickness of 2 mm at a fixed drop energy of 4.2 J, and measuring the number of drops before occurrence of a crack having a length of 1 mm or more; and
(c) an environmental stress crack resistance (ESCR) of at least 200 hours, which is measured according to ASTM D 1693 (Condition B, F50, Igepal 10%).

### [ADVANTAGEOUS EFFECTS]

According to the present disclosure, by increasing the density and dart drop impact strength together with an increase in the environmental stress crack resistance (ESCR), it is possible to provide a polyethylene composition that, while including both virgin polyethylene and post-consumer waste polyethylene (PCW PE), exhibits excellent mechanical properties and improved environmental stress crack resistance.

### [DETAILED DESCRIPTION OF THE EMBODIMENTS]

In the present disclosure, terms such as "first," "second," and so forth are used to describe various components, and these terms are used solely for the purpose of distinguishing one component from another.

In addition, the terms used in this specification are employed merely to illustrate exemplary embodiments and are not intended to limit the invention. Unless the context clearly dictates otherwise, singular expressions are to be interpreted to include the plural. In this specification, terms such as "comprising," "including," or "having" are intended to indicate the presence of a disclosed feature, number, step, or component, or any combination thereof, and shall not be understood as excluding the existence or possibility of one or more other features, numbers, steps, components, or any combination thereof.

Moreover, terms of degree used throughout this specification such as "about" and "substantially" are used to denote a value that is approximately or close to the indicated value when the manufacturing and material tolerances inherent to the disclosed meanings are provided, and are intended to prevent unscrupulous infringement by preventing the exploitation of an exactly or absolutely disclosed value intended merely to aid understanding.

Also, in this specification, "part by weight" means a relative concept that expresses the weight of one substance as a ratio relative to the weight of another substance. For example, in a mixture comprising Substance A weighing 50 g, Substance B weighing 20 g, and Substance C weighing 30 g, based on 100 parts by weight of Substance A, the amounts of Substance B and Substance C are 40 parts by weight and 60 parts by weight, respectively.

Furthermore, "% by weight" means an absolute concept that expresses the weight of a given substance as a percentage of the total weight. In the above example, the contents of Substances A, B, and C in the mixture of 100% total weight are 50 wt%, 20 wt%, and 30 wt%, respectively, wherein the sum of the individual component contents does not exceed 100 wt%.

Since the present disclosure may undergo various modifications and exist in various forms, a few specific embodiments are described in detail below. However, such embodiments are provided merely as examples and are not intended to limit the invention, which should be understood to include all modifications, equivalents, and substitutions within the scope of the invention.

Hereinafter, the present disclosure is described in further detail.

According to one embodiment of the present disclosure, a polyethylene composition comprising virgin polyethylene (Virgin PE) and post-consumer waste polyethylene (PCW PE) is provided, wherein the state of entanglement between an oxidized recycled raw material having polar groups and the nonpolar virgin polyethylene is enhanced, thereby increasing the density, dart drop impact strength, and environmental stress crack resistance (ESCR) so that, when used for blow molding containers, excellent mechanical properties achieve a high load-bearing strength while excellent processability is simultaneously secured.

Specifically, the polyethylene composition of the present disclosure comprises virgin polyethylene (Virgin PE) and post-consumer waste polyethylene (PCW PE) and satisfies the following (a) to (c):
(a) a density of at least 0.949 g/cm³;
(b) a dart drop impact strength of at least 7 drops, as measured in accordance with Dart Drop Method A of ASTM D 1709 by dropping a weight onto a disc specimen of the polyethylene composition having a diameter of 50 mm and a thickness of 2 mm at a fixed drop energy of 4.2 J, and measuring the number of drops before occurrence of a crack having a length of 1 mm or more; and
(c) an environmental stress crack resistance (ESCR) of at least 200 hours, which is measured according to ASTM D 1693 (Condition B, F50, Igepal 10%).

Hereinafter, the polyethylene composition of the present disclosure will be described in further detail.

The polyethylene composition of the present disclosure is characterized in that it comprises virgin polyethylene (Virgin PE) and post-consumer waste polyethylene (PCW PE) and, by enhancing the entangled state between a recycled raw material having polar groups due to oxidation and the nonpolar virgin polyethylene, it increases the density, dart drop impact strength, and environmental stress crack resistance (ESCR).

In particular, the polyethylene composition has a density of at least 0.949 g/cm³, and, for example, it may have a density of from 0.949 g/cm³ or more to 0.954 g/cm³ or less. The polyethylene composition of the present disclosure secures an excellent density even when containing post-consumer waste polyethylene (PCW PE), thereby ensuring sufficient load-bearing strength when used for blow molded containers.

Moreover, the polyethylene composition of the present disclosure is characterized in that it simultaneously secures a high drop impact strength along with the aforementioned density.

Specifically, the polyethylene composition has a dart drop impact strength of at least 7 drops, measured by manufacturing a disc specimen (50 mm in diameter, 2 mm in thickness) from the polyethylene composition by injection molding and then dropping a weight fixed at a drop energy of 4.2 J onto the disc specimen according to ASTM D 1709 (Dart drop method A) before a crack of at least 1 mm in length develops, and, for example, the number of drops may be from 7 drops or more to 30 drops or less.

For example, the drop impact strength of the polyethylene composition can be measured by preparing a disc based on a polyethylene composition (PCR Compound) and dropping a weight onto the disc, and the number of drops is measured until a crack of at least 1 mm in length develops on the disc.

### Preparation of the drop impact Disc

- The disc is manufactured using an injection molding machine, setting the temperature gradient to 210-230 °C, and injecting the PCR Compound to produce the disc.
- Disc dimensions: (Φ 50 mm, thickness 2 mm).

### Drop Impact Evaluation

- According to ASTM D 1709 and the Dart drop method A, using an Instron 9450 (Impact Drop Tower), the disc is fixed and the number of drops required for a crack to form is measured; here the drop energy is fixed at 4.2 J.

Furthermore, the polyethylene composition of the present disclosure is characterized in that it optimizes the density and dart drop impact strength as described above while increasing the environmental stress crack resistance (ESCR).

The polyethylene composition has an environmental stress crack resistance (ESCR) of at least 200 hours as measured according to ASTM D 1693 (Condition B, F50, Igepal 10%), and, for example, it may be from 200 hours or more to 500 hours or less. Preferably, the ESCR of the polyethylene composition may be at least 203 hours, or at least 210 hours, or at least 215 hours, or at least 220 hours, or at least 250 hours, or at least 260 hours, or at least 270 hours, or at least 280 hours, and further may be at most 400 hours, or at most 350 hours, or at most 320 hours, or at most 300 hours, or at most 288 hours. With such excellent ESCR characteristics, the polyethylene composition of the present disclosure, when used for blow molded containers, secures excellent mechanical properties, excellent processability, and high drop impact strength simultaneously.

In particular, the polyethylene composition according to the present disclosure, by optimizing the density and dart drop impact strength as described above and increasing the environmental stress crack resistance (ESCR), enables the use of post-consumer waste polyethylene in higher amounts while still achieving excellent impact strength, tensile strength, chemical resistance, and thermal stability approaching that of virgin resin (VIRGIN) when used for blow molded containers, thereby simultaneously securing excellent processability and high drop impact strength.

Moreover, according to the present disclosure, the polyethylene composition further optimizes the melt index along with the density to secure both excellent processability and high drop impact strength.

The polyethylene composition has a melt index (MI_{2.16}, ASTM D 1238, 190 °C, 2.16 kg) of at least 0.25 g/10 min and, for example, may be from 0.25 g/10 min or more to 0.8 g/10 min or less. Preferably, the melt index (MI_{2.16}, ASTM D 1238, 190 °C, 2.16 kg) of the polyethylene composition is at most 0.7 g/10 min, or at most 0.65 g/10 min, or at most 0.6 g/10 min, or at most 0.55 g/10 min, or at most 0.5 g/10 min, or at most 0.45 g/10 min, or at most 0.42 g/10 min, or at most 0.4 g/10 min, or at most 0.38 g/10 min, while being at least 0.26 g/10 min, or at least 0.27 g/10 min, or at least 0.28 g/10 min, or at least 0.29 g/10 min. With the melt index (MI2.16) as described above, the polyethylene composition exhibits excellent mechanical properties such as high load-bearing strength combined with excellent processability and high drop impact strength.

Meanwhile, according to the present disclosure, the polyethylene composition includes virgin polyethylene and post-consumer waste polyethylene (PCW PE). As described above, by reinforcing the entanglement between the recycled material, which has polar groups due to oxidation, and the nonpolar virgin polyethylene, it is possible to enhance high density, drop impact strength, and environmental stress crack resistance (ESCR). The virgin resin includes polyethylene that optimizes the ratio of the low-molecular-weight region while increasing the ratio of the high-molecular-weight region within the molecular structure, as will be described later, to achieve this effect.

Specifically, the virgin polyethylene may be an ethylene homopolymer or an ethylene/α-olefin copolymer, or a dry blend of one or more of the above-mentioned ethylene homopolymer and ethylene/α-olefin copolymer.

For example, when one or more of the above-mentioned ethylene homopolymer and ethylene/α-olefin copolymer are dry blended, the weight ratio of one or more ethylene homopolymer to one or more ethylene/α-olefin copolymer may be from 1:99 to 99:1, or from 5:95 to 95:5, or from 10:90 to 90:10, or from 15:85 to 85:15, or from 20:80 to 80:20, or from 25:75 to 75:25, or from 30:70 to 70:30, or from 35:65 to 65:35, or from 40:60 to 60:40, or from 45:55 to 55:45.

The α-olefin is selected from the group consisting of 1-butene, 1-pentene, 1-hexene, 4-methyl-1-pentene, 1-octene, 1-decene, 1-dodecene, 1-tetradecene, 1-hexadecene, 1-octadecene, 1-eicosene, and mixtures thereof.

For example, when the virgin polyethylene is a copolymer, based on 1 mol of ethylene, it may include α-olefin in an amount of about 0.45 mol or less, or about 0.1 mol to about 0.45 mol, or about 0.4 mol or less, or about 0.2 mol to about 0.4 mol, or about 0.35 mol or less, or about 0.25 mol to about 0.35 mol.

Specifically, when the virgin polyethylene comprises an ethylene/α-olefin copolymer, 1-hexene may be used as the α-olefin comonomer with ethylene.

For example, the virgin polyethylene may be an ethylene homopolymer without any additional copolymer, or an ethylene/1-hexene copolymer, or a dry blend of an ethylene homopolymer and an ethylene/1-hexene copolymer.

Meanwhile, the virgin polyethylene comprises one or more types of the above-mentioned ethylene homopolymer or ethylene/α-olefin copolymer, and may further comprise at least one type of polar copolymer containing ethylene.

For example, the novel polyethylene may be an ethylene homopolymer that includes no separate copolymer, or an ethylene/1-hexene copolymer, or a mixture (dry blend) of the aforementioned ethylene homopolymer and ethylene/1-hexene copolymer, or a melt blend of an ethylene homopolymer that includes no separate copolymer and a polar copolymer containing ethylene, or a melt blend of an ethylene/1-hexene copolymer and a polar copolymer containing ethylene, or a mixture (dry blend) of the aforementioned ethylene homopolymer and ethylene/1-hexene copolymer mixed with a melt blend of a polar copolymer containing ethylene.

The polar copolymer comprises a copolymer containing ethylene and includes one or more polar functional groups selected from the group consisting of carboxyl groups, hydroxyl groups, carbonyl groups, nitrile groups, and amide groups. Preferably, the polar functional groups of the polar copolymer may be carboxyl groups, hydroxyl groups, or carbonyl groups. For example, it may be a vinyl acetate (VA) group.

Meanwhile, when the polar copolymer is melt blended with the ethylene homopolymer or the ethylene/α-olefin copolymer, it is preferable that the content of the polar functional group is high in order to maintain the property characteristics of the ethylene homopolymer or the ethylene/α-olefin copolymer. Specifically, the polar functional group content of the polar copolymer may be from 20 wt% or more to 50 wt% or less based on the total weight of the polar copolymer.

For example, the polar functional group content can be measured by Fourier transform infrared (FT-IR) spectroscopy, nuclear magnetic resonance (NMR) spectroscopy, X-ray photoelectron spectroscopy (XPS), or ultraviolet-visible (UV-Vis) absorption spectroscopy using any one of these methods. The specific measurement method may be applied by using conventional methods known to be applicable to polyethylene or ethylene copolymers.

In one specific embodiment, when using Fourier transform infrared (FTIR) spectroscopy, the absorbance is measured over various wavelengths (for example, 4000 cm⁻¹ to 400 cm⁻¹) and after obtaining a spectrum including the absorption bands associated with the polar functional group, the area under the peaks corresponding to ethylene and the polar functional group such as the vinyl acetate (VA) group is converted into a mass fraction along with the total peak area to calculate the polar functional group content.
In another specific embodiment, when using nuclear magnetic resonance spectroscopy (NMR, for example, Bruker 500 MHz), a standard solution (stock solution) of 0.001 M is prepared by dissolving chromium(III) acetylacetonate [Cr(acac)3] as a relaxation agent in the organic solvent tetrachloroethane-d2 (TCE-d2). Then, 11 mg of the above-mentioned ethylene polar copolymer sample is added to 0.6 mL of the stock solution and heated at 393 K on a heating block for 40 minutes. After confirming that the sample is uniformly dissolved, the sample is transferred to an NMR tube and its ¹H NMR spectrum is measured at 393 K; the area under the total peaks and the area under the proton (H) peaks corresponding to ethylene and vinyl acetate (VA) of the polar functional groups are then converted into a mass fraction to calculate the content of polar functional groups such as vinyl acetate (VA).

Preferably, the polar functional group content of the polar copolymer is at least 22 wt%, or at least 24 wt%, or at least 26 wt%, or at least 28 wt%, or at least 30 wt%, or at least 32 wt%, or at least 34 wt%, or at least 36 wt%, or at least 38 wt%, or at least 40 wt%, while being at most 48 wt%, or at most 46 wt%, or at most 45 wt%, or at most 44 wt%, or at most 43 wt%, or at most 42 wt%.

Specifically, such a polar copolymer is an ethylene-containing copolymer, for example, an ethylene-vinyl acetate copolymer.

In this case, the above-mentioned ethylene homopolymer or ethylene/α-olefin copolymer and the above-mentioned polar copolymer may be melt blended. For example, when one or more of the ethylene homopolymer or the ethylene/α-olefin copolymer and one or more of the polar copolymer are melt blended, the weight ratio of the total weight of one or more of the ethylene homopolymer and the ethylene/α-olefin copolymer to the total weight of one or more of the polar copolymer is from 70:30 to 99:1.

Preferably, the weight ratio between one or more of the ethylene homopolymer and the ethylene/α-olefin copolymer and one or more of the polar copolymer is from 70:30 to 97:3, or from 70:30 to 95:5, or from 70:30 to 93:7, or from 70:30 to 90:10, or from 72:28 to 90:10, or from 75:25 to 90:10, or from 78:22 to 90:10, or from 80:20 to 90:10, or from 83:17 to 90:10, or from 85:15 to 90:10, or from 87:13 to 90:10. For example, the weight ratio may be 70:30, or 80:20, or 87:13, or 90:10, or 99:1.

Meanwhile, the virgin polyethylene may be high-density polyethylene (HDPE) having a density (ASTM D1505, at 23 °C) of at least 0.944 g/cm³, or satisfying a density of from a 0.944 g/cm³ or more to 0.954 g/cm³ or less.

More specifically, the density of the virgin polyethylene is at least 0.945 g/cm³, or at least 0.946 g/cm³ and is at most 0.954 g/cm³, or at most 0.953 g/cm³.

When the density of the virgin polyethylene satisfies the above range, the compatibility with post-consumer waste polyethylene is improved, and when blended with post-consumer waste polyethylene, the use of an excessive amount of virgin polyethylene can be avoided while minimizing the degradation of major properties such as ESCR.

Furthermore, the virgin polyethylene, in the GPC curve graph (with the x-axis as log Mw and the y-axis as dw/dlogMw), has an integration value in the region where Log Mw is 5.5 or greater that is either 15% or less, or more than 5% but less than or equal to 15% of the total integration value.

Specifically, the integration value of the region where Log Mw is 5.5 or greater is preferably 14.5% or less, or 14% or less, or 13.8% or less, or 13.5% or less, or 13% or less in order to secure excellent processability and high drop impact strength when mixed with virgin polyethylene and post-consumer waste polyethylene. However, when considering the excellent mechanical properties of high density after mixing virgin polyethylene with post-consumer waste polyethylene, the integration value of the region where Log Mw is 5.5 or greater may be at least 6%, or at least 8%, or at least 10%, or at least 11.0%.

For example, the GPC graph of the virgin polyethylene can be obtained by gel permeation chromatography (GPC), and the specific measurement method may be applied using conventional methods known to be applicable to polyethylene.

By having the integration value of the region where Log Mw is 5.5 or greater as described above, the ratio of the high molecular weight region within the molecular structure of virgin polyethylene is enhanced, thereby improving mechanical properties such as environmental stress cracking resistance (ESCR) in combination with excellent compatibility with post-consumer waste polyethylene.

Furthermore, the virgin polyethylene has an entanglement molecular weight (entanglement molecular weight, Me) of less than 10,000 g/mol or from at least 50 g/mol to less than 10,000 g/mol. For example, the entanglement molecular weight (Me) of the virgin polyethylene may be 9,990 g/mol or less, or 9,950 g/mol or less, or 9,900 g/mol or less, or 9,800 g/mol or less, or 9,700 g/mol or less, or 9,600 g/mol or less, or 9,555 g/mol or less, and in addition may be at least 50 g/mol, or at least 100 g/mol, or at least 300 g/mol, or at least 500 g/mol, or at least 800 g/mol, or at least 1,000 g/mol, or at least 1,500 g/mol, or at least 2,000 g/mol, or at least 3,000 g/mol, or at least 4,000 g/mol, or at least 5,000 g/mol, or at least 6,000 g/mol, or at least 6,500 g/mol, or at least 7,000 g/mol, or at least 7,500 g/mol, or at least 8,000 g/mol, or at least 8,500 g/mol, or at least 9,000 g/mol.

The entanglement molecular weight (Me) refers to the average molecular weight between entanglement points of polyethylene (or ethylene copolymer) chains; a lower Me indicates a higher degree of chain entanglement, which results in superior resistance to deformation and crack resistance under external forces. Therefore, in the present disclosure, the virgin polyethylene is characterized in that, due to its low entanglement molecular weight, it can achieve high levels of durability and other mechanical properties.

The entanglement molecular weight (Me) can be derived according to the following Equation 1, and, for example, it can be measured using a hybrid rheometer (DHR-2, Discovery Hybrid Rheometer-2): [Equation 1] $Me = ρRT / G 0 N$ in Equation 1, G0N is the plateau modulus, ρ is the melt density, R is the gas constant, and T is the absolute temperature.

Meanwhile, the plateau modulus G0N is inversely proportional to the intercept of the creep compliance (J0) and can be obtained from the following Equation 2: [Equation 2] $G 0 N = 6 / \left(5J0\right)$ in Equation 2, J0 can be measured using a 25 mm diameter plate in the DHR-2 (TA Instruments) as follows.

First, under a nitrogen atmosphere at 190 °C, the ethylene (co)polymer sample is melted and placed between 25 mm plates so that its thickness becomes 2 mm. After the temperature stabilizes and vertical stress generated by the compression of the sample is relieved by waiting for 2 minutes, a shear stress of 1 Pa is applied for 1,000 seconds to the melted sample. After the measurement, a graph is plotted with the creep compliance J (the strain divided by the applied shear stress) on the y-axis and time (t) on the x-axis; J0 is determined using the tangent line of the region where the slope is constant once steady state is reached.

For the polyethylene resin specimen, by measuring the maximum stress at which permanent deformation occurs under specific conditions, the aforementioned entanglement molecular weight can be measured.

Furthermore, in the polyethylene composition according to an embodiment of the present disclosure, the virgin polyethylene may be manufactured using various catalysts, preferably using a catalyst composition comprising a metallocene compound, without being limited thereto.

For example, the virgin polyethylene may be manufactured under the presence of a catalyst composition comprising a first metallocene compound represented by Chemical Formula 1 and a second metallocene compound represented by Chemical Formula 2, with the introduction of hydrogen gas:

[Chemical Formula 1] (Cp¹R^{a})ₙ(Cp²R^{b})M¹Z¹₃₋ₙ

wherein in Chemical Formula 1,
M¹ is a Group 4 transition metal;
Cp¹ and Cp² are each cyclopentadienyl, which may be substituted with C1-20 hydrocarbons or unsubstituted;
R^{a} and R^{b} may be identical or different and are each independently selected from a group comprising hydrogen, C₁₋₂₀ alkyl, C₁₋₂₀ alkoxy, C₂₋₂₀ alcoxyalkyl, C₆₋₂₀ aryl, C₆₋₂₀ aryloxy, C₂₋₂₀ alkenyl, C₇₋₄₀ alkylaryl, C₇₋₄₀ arylalkyl, C₈₋₄₀ arylalkenyl, C₂₋₂₀ alkynyl, or a C₂₋₂₀ heteroaryl comprising one or more heteroatoms selected from the group consisting of N, O, and S;
Z¹ is a halogen, C₁₋₂₀ alkyl, C₂₋₂₀ alkenyl, C₇₋₄₀ alkylaryl, C₇₋₄₀ arylalkyl, C₆₋₂₀ aryl, a substituted or unsubstituted C₁₋₂₀ alkylidene, a substituted or unsubstituted amino group, C₂₋₂₀ alkylalkoxy, or C₇₋₄₀ arylalkoxy;
n is 1 or 0, 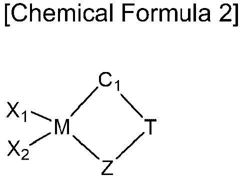
wherein in Chemical Formula 2,
C₁ is one of the ligands represented by Chemical Formulae 3 to 6 below: 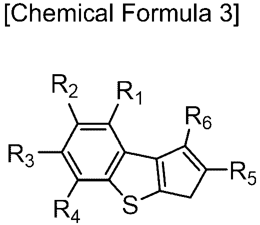 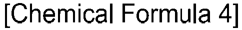 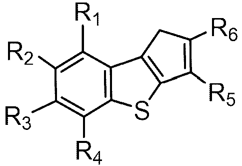 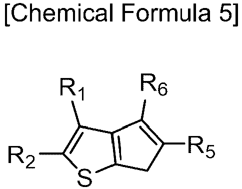 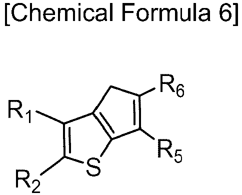
Wherein in Chemical Formulae 3 to 6,
R₁ to R₆ may be identical or different and are each independently selected from hydrogen, C₁₋₃₀ alkyl, C₁₋₃₀ alkoxy, C₂₋₃₀ alcoxyalkyl, C₆₋₃₀ aryl, C₆₋₃₀ aryloxy, C₂₋₃₀ alkenyl, C₂₋₃₀ alkynyl, C₃₋₃₀ cycloalkyl, C₇₋₄₀ alkylaryl, C₈₋₄₀ arylalkenyl, C₈₋₄₀ alkynylaryl, C₇₋₄₀ arylalkyl, C₈₋₄₀ arylalkenyl, or C₈₋₄₀ arylalkynyl;
M is Ti, Zr, or Hf;
Z is -O-, -S-, -NR₇-, or -PR₇-;
R₇ is independently selected from hydrogen, C₁₋₃₀ alkyl, C₆₋₃₀ aryl, C₂₋₃₀ alkenyl, C₂₋₃₀ alkynyl, C₃₋₃₀ cycloalkyl, C₇₋₄₀ alkylaryl, C₈₋₄₀ alkenylaryl, C₈₋₄₀ alkynylaryl, C₇₋₄₀ arylalkyl, C₈₋₄₀ arylalkenyl, C₈₋₄₀ arylalkynyl, C₁₋₃₀ alkoxysilyl group, C₆₋₃₀ aryloxysilyl, C₁₋₃₀ alkylsilyl group, or C₁₋₃₀ silylalkyl group,
X₁ and X₂ may be identical or different and are each independently selected from halogen, C₁₋₃₀ alkyl, C₂₋₃₀ alkenyl, C₇₋₃₀ alkylaryl, C₇₋₃₀ arylalkyl, C₆₋₂₀ aryl, a substituted or unsubstituted C₁₋₃₀ alkylidene, a substituted or unsubstituted amino group, C₂₋₃₀ alkylalkoxy, or C₇₋₃₀ arylalkoxy.
T is 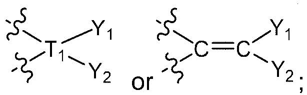
T₁ is C, Si, Ge, Sn, or Pb;
Y₁ is independently selected from hydrogen, C₁₋₃₀ alkyl, C₁₋₃₀ alkoxy, C₂₋₃₀ alkoxyalkyl, C₆₋₃₀ aryl, C₆₋₃₀ aryloxy, C₂₋₃₀ alkenyl, C₂₋₃₀ alkynyl, C₃₋₃₀ cycloalkyl, C₇₋₄₀ alkylaryl, C₈₋₄₀ alkenylaryl, C₈₋₄₀ alkynylaryl, C₇₋₄₀ arylalkyl, C₈₋₄₀ arylalkenyl, C₈₋₄₀ arylalkynyl, silyl group (-SiH₃), C₁₋₃₀ alkoxysilyl, C₂₋₃₀ alkoxyalkylsilyl, C₆₋₃₀ aryloxysilyl, C₁₋₃₀ haloalkyl, C₆₋₃₀ haloaryl, or -NR₉R₁₀.
Y₂ is C₂₋₃₀ alcoxyalkyl or C₇₋₄₀ aryloxyalkyl;
R₉ and R₁₀ are each independently hydrogen, C₁₋₃₀ alkyl, C₆₋₃₀ aryl, C₂₋₃₀ alkenyl, C₂₋₃₀ alkynyl, C₃₋₃₀ cycloalkyl, C₇₋₄₀ alkylaryl, C₈₋₄₀ alkenylaryl, C₈₋₄₀ alkynylaryl, C₇₋₄₀ arylalkyl, C₈₋₄₀ arylalkenyl, or C₈₋₄₀ arylalkynyl, or they are linked together to form an aliphatic or aromatic ring.

On the other hand, unless otherwise specified in this specification, the following terms can be defined as follows.

Halogen may be fluorine (F), chlorine (Cl), bromine (Br), or iodine (I).

A C₁₋₃₀ alkyl group may be a straight-chain alkyl, a branched-chain alkyl, or a cyclic alkyl group. More specifically, a C₁₋₂₀ alkyl group may be a C₁₋₁₅ straight-chain alkyl group; a C₁₋₁₀ straight-chain alkyl group; a C₁₋₅ straight-chain alkyl group; a C₃₋₂₀ branched-chain or cyclic alkyl group; a C₃₋₁₅ branched-chain or cyclic alkyl group; or a C₃₋₁₀ branched-chain or cyclic alkyl group. More specifically, a C₁₋₂₀ alkyl group may be a methyl group, an ethyl group, an n-propyl group, an iso-propyl group, an n-butyl group, an iso-butyl group, a tert-butyl group, an n-pentyl group, an iso-pentyl group, a neo-pentyl group, or a cyclohexyl group, among others.

A C₂₋₃₀ alkenyl group may be a straight-chain alkenyl, a branched-chain alkenyl, or a cyclic alkenyl group. More specifically, a C₂₋₃₀ alkenyl group may be a C₂₋₂₀ straight-chain alkenyl group, a C₂₋₁₀ straight-chain alkenyl group, a C₂₋₅ straight-chain alkenyl group, a C₃₋₂₀ branched-chain alkenyl group, a C₃₋₁₅ branched-chain alkenyl group, a C₃₋₁₀ branched-chain alkenyl group, a C₅₋₂₀ cyclic alkenyl group, or a C₅₋₁₀ cyclic alkenyl group. More specifically, a C₂₋₂₀ alkenyl group may be an ethenyl group, a propenyl group, a butenyl group, a pentenyl group, or a cyclohexenyl group, among others.

A C₆₋₃₀ aryl group may mean a monocyclic, bicyclic, or tricyclic aromatic hydrocarbon. More specifically, a C₆₋₃₀ aryl group may be a phenyl group, a naphthyl group, or an anthracenyl group, among others.

A C₇₋₄₀ alkylaryl group means a substituent in which one or more hydrogens of an aryl group are substituted by an alkyl group. More specifically, a C₇₋₄₀ alkylaryl group may be a methylphenyl group, an ethylphenyl group, an n-propylphenyl group, an iso-propylphenyl group, an n-butylphenyl group, an iso-butylphenyl group, a tert-butylphenyl group, or a cyclohexylphenyl group, among others.

A C₇₋₄₀ arylalkyl group means a substituent in which one or more hydrogens of an alkyl group are substituted by an aryl group. More specifically, a C₇₋₄₀ arylalkyl group may be a benzyl group, a phenylpropyl group, or a phenylhexyl group, among others.

The C₁₋₂₀ alkoxy group may include a methoxy group, an ethoxy group, a phenoxy group, a cyclohexoxy group, and the like, but is not limited thereto.

The C₂₋₂₀ alkoxyalkyl group is a functional group in which one or more hydrogens of an alkyl group as described above are substituted by an alkoxy group; more specifically, it may be a methoxymethyl group, a methoxyethyl group, an ethoxymethyl group, an iso-propoxymethyl group, an iso-propoxyethyl group, an iso-propoxyhexyl group, a tert-butoxymethyl group, a tert-butoxyethyl group, a tert-butoxyhexyl group, and the like; or it may be an aryloxyalkyl group such as a phenoxyhexyl group, but is not limited thereto.

The C₁₋₂₀ alkylsilyl group or C₁₋₂₀ alkoxysilyl group is an active group in which one to three hydrogen atoms of -SiH₃ are substituted by one to three alkyl groups or alkoxy groups as described above; more specifically, it may be a methylsilyl group, a dimethylsilyl group, a trimethylsilyl group, a dimethylethylsilyl group, a diethylmethylsilyl group, or a dimethylpropylsilyl group, among others; it may be a methoxysilyl group, a dimethoxysilyl group, a trimethoxysilyl group, or a dimethoxyethoxysilyl group, among others; or it may be a methoxydimethylsilyl group, a diethoxymethylsilyl group, or a dimethoxypropylsilyl group, among others, but is not limited thereto.

The C₁₋₂₀ silylalkyl group is an active group in which one or more hydrogens of an alkyl group as described above are substituted by a silyl group; more specifically, it may be -CH₂-SiH₃, a methylsilylmethyl group, or a dimethylethoxysilylpropyl group, among others, but is not limited thereto.

The sulfonate group has the structure -O-SO₂-R', wherein R' may be a C₁₋₂₀ alkyl group. More specifically, a C₁₋₂₀ sulfonate group may be a methanesulfonate group or a phenylsulfonate group, among others, but is not limited thereto.

The heteroaryl group is a C₂₋₂₀ heteroaryl group containing one or more heteroatoms selected from N, O, and S; specific examples include xanthene, thioxanthene, thiophene, furan, pyrrole, imidazole, thiazole, oxazole, oxadiazole, triazole, pyridyl, bipyridyl, pyrimidyl, triazinyl, acridyl, pyridazinyl, pyrazinyl, quinolinyl, quinazolinyl, quinoxalinyl, phthalazinyl, pyrido-pyrimidinyl, pyrido-pyrazinyl, pyrazino-pyrazinyl, isoquinolinyl, indolyl, carbazolyl, benzooxazolyl, benzoimidazolyl, benzothiazolyl, benzocarbazolyl, benzothiophenyl, dibenzothiophenyl, benzofuranyl, phenanthroline, isooxazolyl, thiadiazolyl, phenothiazinyl, and dibenzofuranyl, among others, but is not limited thereto.

The substituents described above may be arbitrarily replaced, within a range that exhibits the same or similar effects as the intended effects, by one or more substituents selected from the group consisting of a hydroxyl group; a halogen; an alkyl group, alkenyl group, aryl group, or alkoxy group; an alkyl group, alkenyl group, aryl group, or alkoxy group containing one or more heteroatoms of Groups 14 to 16; a silyl group; an alkylsilyl group or alkoxysilyl group; a phosphine group; a phosphide group; a sulfonate group; and a sulfonyl group.

Furthermore, two substituents adjacent to each other may be connected to each other to form an aliphatic or aromatic ring, which means that the atoms of the two substituents and the atom(s) to which the two substituents are bound are connected to form a ring. More specifically, as an example, when the R₉ and R₁₀ of - NR₉R₁₀ are connected to each other to form an aliphatic ring, a piperidinyl group may be used, and when R₉ and R₁₀ of -NR₉R₁₀ are connected to each other to form an aromatic ring, a pyrrolyl group may be exemplified.

Furthermore, the Group 4 transition metal may be titanium (Ti), zirconium (Zr), or hafnium (Hf), but is not limited thereto.

For example, the first metallocene compound represented by Chemical Formula 1 is a non-crosslinked compound comprising the ligands Cp¹ and Cp², where Cp¹ and Cp² may be identical or different, are each cyclopentadienyl, and may be substituted one or more times or 1 to 3 times with C₁₋₁₀ alkyl groups.

Also, the ligands Cp¹ and Cp², for example, can be adjusted to easily control the chemical structure, molecular weight, molecular weight distribution, mechanical properties, and transparency of the olefin polymer manufactured by adjusting the degree of steric hindrance according to the type of substituted group. More specifically, the ligands Cp¹ and Cp² are each substituted by R^{a} and R^{b}, respectively; in this case, R^{a} and R^{b} may be identical or different, and are each independently hydrogen, a C₁₋₂₀ alkyl, a C₂₋₂₀ alkoxyalkyl, a C₇₋₄₀ arylalkyl, or a C₂₋₁₂ heteroaryl group containing one or more heteroatoms selected from the group consisting of N, O, and S, or more specifically, may be a C₁₋₁₀ alkyl, C₂₋₁₀ alkoxyalkyl, C₇₋₂₀ arylalkyl, or a C₄₋₁₂ heteroaryl group containing one or more heteroatoms selected from the group consisting of N, O, and S.

In addition, between the ligands of Cp¹ and Cp² there exists M¹Z¹₃₋ₙ, which may affect the storage stability of the metal complex. To more effectively secure this effect, Z¹ may be independently a halogen or a C₁₋₂₀ alkyl, and more specifically may be independently F, Cl, Br, or I. Moreover, M1 may be Ti, Zr, or Hf; or Zr or Hf; or may be Zr.

Among the first transition metal compounds, in Chemical Formula 1, where Cp¹ and Cp² are each unsubstituted or substituted cyclopentadienyl groups, and R^{a} and R^{b} are each independently hydrogen, C₁₋₁₀ alkyl, C₂₋₁₀ alkoxyalkyl, or C₇₋₂₀ arylalkyl, at least one of R^{a} and R^{b} may be an alkoxyalkyl group such as t-butoxyhexyl, more specifically, a substituent of the form -(CH₂)ₙ-OR (where R is a straight-chain or branched-chain alkyl group having 1 to 6 carbon atoms and n is an integer from 2 to 4).

The first metallocene compound represented by Chemical Formula 1 may, for example, be represented by one of the structural formulae shown below, but is not limited thereto.

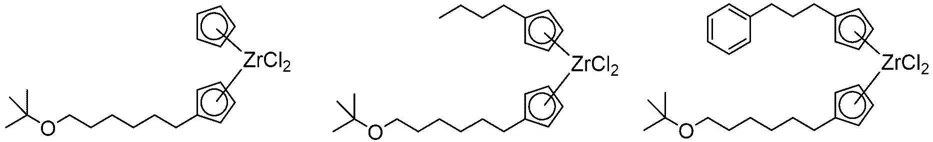

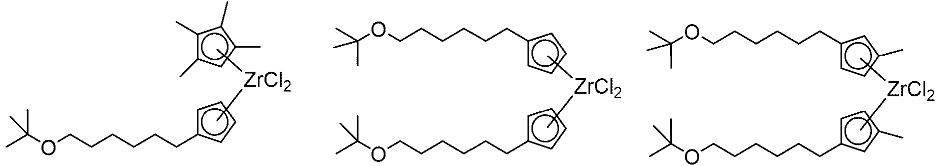

Also, the second metallocene compound comprises an aromatic ring compound including thiophene with different ligands and a base compound containing a Group 14 or Group 15 element, wherein the different ligands are cross-linked by -T- and there exists M(X₁)(X₂) between the different ligands.

More specifically, in Chemical Formula 2, M is Ti, Zr, or Hf, and more specifically may be Ti.

Also, R₁ to R₄ are each independently hydrogen or C₁₋₂₀ alkyl, more specifically hydrogen or methyl.

Also, R₅ and R₆ are each independently C₁₋₁₀ alkyl, more specifically both R5 and R6 may be methyl.

Also, Z is -NR₇-, and R₇ is C₁₋₁₀ alkyl, more specifically may be a C₃₋₁₀ branched alkyl such as t-butyl.

Also, T is 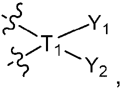 and T₁ is C or Si, Y₁ is C₁₋₂₀ alkyl, C₁₋₂₀ alkoxy, C₂₋₂₀ alkoxyalkyl, C₆₋₂₀ aryl, C₇₋₃₀ alkylaryl, C₇₋₃₀ arylalkyl, C₆₋₂₀ aryloxy, or C₇₋₃₀ aryloxyalkyl, and Y₂ is C₂₋₂₀ alkoxyalkyl, or C₇₋₃₀ aryloxyalkyl; more specifically, Y₁ may be one of methyl, ethyl, n-propyl, or n-butyl, and Y₂ is C₂₋₂₀ alkoxyalkyl, or C₇₋₃₀ aryloxyalkyl, more specifically Y₂ may be one of methoxymethyl, methoxyethyl, ethoxymethyl, iso-propoxymethyl, iso-propoxyethyl, iso-propoxyhexyl, tert-butoxymethyl, tert-butoxyethyl, tert-butoxyhexyl, or phenoxyhexyl.

Also, X₁ and X₂ are each independently a halogen or C₁₋₂₀ alkyl, and more specifically may be chloro.

For example, as the second metallocene compound, one may exemplify a compound represented by Chemical Formulae 2a to 2d: 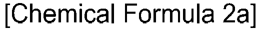 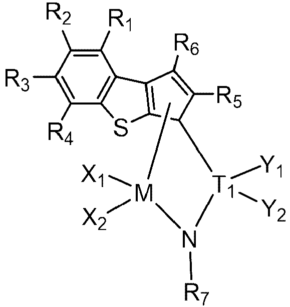 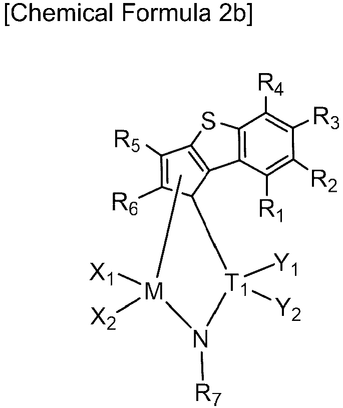 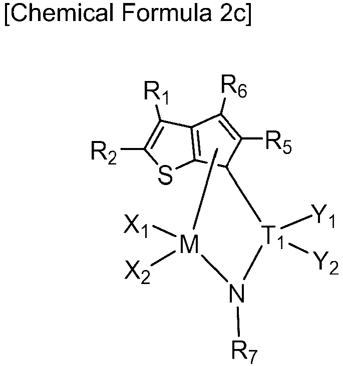 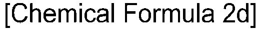 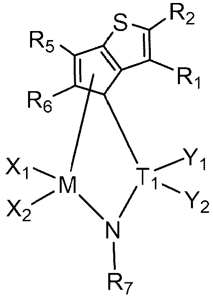 wherein in Chemical Formulae 2a to 2d, R₁ to R₇, M, X₁, X₂, T₁, Y₁, and Y₂ are as defined above.

More specifically, in Chemical Formulae 2a to 2d, M is Ti, Zr, or Hf, more specifically Ti; R1 to R4 are each independently hydrogen or C₁₋₂₀ alkyl, more specifically hydrogen or methyl; R₅ and R₆ are each independently C₁₋₁₀ alkyl, more specifically, both R₅ and R₆ are methyl; R₇ is C₁₋₁₀ alkyl, more specifically a branched C₃₋₁₀ alkyl such as t-butyl; T₁ is C or Si; Y₁ is C₁₋₂₀ alkyl, C₁₋₂₀ alkoxy, C₂₋₂₀ alkoxyalkyl, C₆₋₂₀ aryl, C₇₋₃₀ alkylaryl, C₇₋₃₀ arylalkyl, C₆₋₂₀ aryloxy, or C₇₋₃₀ aryloxyalkyl; Y₂ is C₂₋₂₀ alkoxyalkyl or C₇₋₃₀ aryloxyalkyl, more specifically Y₁ may be one of methyl, ethyl, n-propyl, or n-butyl, and Y₂ may be methoxymethyl, methoxyethyl, ethoxymethyl, iso-propoxymethyl, iso-propoxyethyl, iso-propoxyhexyl, tert-butoxymethyl, tert-butoxyethyl, tert-butoxyhexyl, or phenoxyhexyl; and X₁ and X₂ are each independently selected from halogen or C₁₋₂₀ alkyl, more specifically chloro compounds.

More specifically, examples of the second metallocene compound include, without limitation, the compounds illustrated in the following structure:

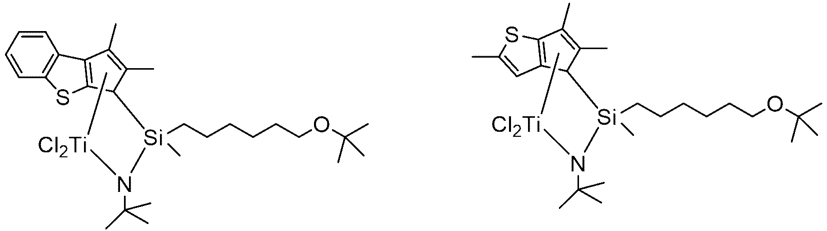

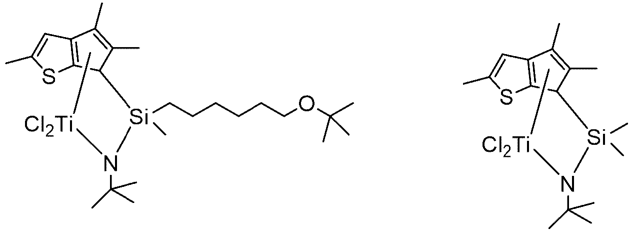

Also, in the catalyst composition, the ratio of the first metallocene compound to the second metallocene compound may be in a molar ratio from 1:1.1 to 1:5, and more specifically may be at least 1:1.1, or at least 1:1.2, or at least 1:1.3, and at most 1:5, or at most 1:3.

Meanwhile, the catalyst composition may further comprise a support, in which case the first and second metallocene compounds are used in a supported state on the support.

Examples of the support include silica, alumina, magnesia, silica-alumina, and silica-magnesia, which typically may further comprise oxide, carbonate, sulfate, and nitrate components such as Na₂O, K₂CO₃, BaSO₄, and Mg(NO₃)₂.

Also, the catalyst composition may further comprise a cocatalyst to improve high activity and process stability; the cocatalyst may be, for example, an alkylaluminoxane such as methylaluminoxane, ethylaluminoxane, isobutylaluminoxane, or butylaluminoxane.

Meanwhile, in the polyethylene composition according to one embodiment of the present disclosure, the virgin polyethylene is manufactured by polymerizing ethylene using the aforementioned catalyst composition in a polymerization process. The polymerization process may be carried out in a single reactor under a single polymerization condition using a single catalyst, that is, by a monomodal (or unimodal) polymerization process and, more specifically, may be conducted in a single loop slurry reactor in the presence of the aforementioned hybrid supported catalyst.

In this case, the polymerization temperature may be from 25 to 500 °C, preferably from 25 to 200 °C, more preferably from 50 to 150 °C. Also, the polymerization pressure may be from 1 to 100 Kgf/cm², preferably from 1 to 50 Kgf/cm², more preferably from 5 to 30 Kgf/cm².

On the other hand, according to the present disclosure, the polyethylene composition comprises post-consumer waste polyethylene (PCW PE) together with the virgin polyethylene (Virgin PE).

Specifically, the polyethylene composition of the present disclosure may comprise from 10 wt% to 90 wt% of post-consumer waste polyethylene (PCW PE); particularly, in order to enhance the effect of reducing carbon dioxide emissions and in terms of cost saving, the content of post-consumer waste polyethylene (PCW PE) may be at least 20 wt%, or at least 30 wt%, or at least 35 wt%, or at least 40 wt%, or at least 45 wt%, or at least 50 wt%, or at least 55 wt%. In order to improve the impact strength, tensile strength, chemical resistance, and thermal stability of the polyethylene composition and to minimize the amount of virgin resin (VIRGIN) used, the content of post-consumer waste polyethylene (PCW PE) may be at most 85 wt%, or at most 80 wt%, or at most 75 wt%, or at most 70 wt%, or at most 65 wt%, or at most 60 wt%.

The post-consumer waste polyethylene (PCW PE) may have a melt index (MI_{2.16}, measured at 190 °C under a 2.16 kg load) of from 0.10 g/10 min to 0.3 g/10 min, and more specifically may be from 0.12 g/10 min to 0.28 g/10 min, or from 0.13 g/10 min to 0.25 g/10 min, or from 0.15 g/10 min to 0.2 g/10 min.

Also, the post-consumer waste polyethylene (PCW PE) is characterized by a density of from 0.951 g/cm³ to 0.953 g/cm³.

Furthermore, the post-consumer waste polyethylene (PCW PE) has an environmental stress crack resistance (ESCR) of from 40 hours to 50 hours as measured according to ASTM D 1693 (Condition B, F50, Igepal 10%).

The polyethylene composition according to the present disclosure uses the virgin polyethylene and post-consumer waste polyethylene as described above and optimizes the density and dart drop impact strength while increasing the environmental stress crack resistance (ESCR), thereby enabling the manufacture of molded articles having excellent mechanical properties combined with excellent processability.

In particular, the polyethylene composition according to the present disclosure, even when the content of post-consumer waste polyethylene is increased, can secure excellent impact strength, tensile strength, chemical resistance, and thermal stability approaching those of virgin resin.

Below, in order to aid in the understanding of the present disclosure, exemplary embodiments are provided. However, the following embodiments are provided merely to facilitate understanding of the present disclosure and are not intended to limit the scope thereof.

### <Examples>

### Example 1: Preparation of polyethylene composition

A dry blend was conducted using 40 wt% virgin polyethylene (Virgin PE) and 60 wt% post-consumer waste polyethylene (PCW PE), and then the blend was extruded through a twin-screw extruder to produce a polyethylene composition (PCR Compound). In this example, the post-consumer waste polyethylene (PCW PE, Baeksan Natural product of Baeksan Plastic Co.) had a melt index MI_{2.16} (measured according to ASTM D 1238 under Condition E at 190 °C with a 2.16 kg load) at the level of 0.15-0.2 g/10 min, a density (measured according to ASTM D 1505) of 0.951-0.953 g/cm3, and an ESCR (measured according to ASTM D 1693 using a 10% Igepal CO-630 Solution at 50 °C until F50, i.e. 50% failure) at the level of 40-50 hours.

Also, the virgin polyethylene used in this example was produced by polymerizing ethylene in a single slurry loop reactor in the presence of a catalyst obtained by co-supporting a first metallocene compound (1) and a second metallocene compound (2) on a silica support (Grace Davison, SP2212) at a molar ratio of the first metallocene compound to the second metallocene compound of 1:1.3, with isobutane at 15 kg/h, ethylene at 33 kg/h, hydrogen at 6.4 g/h relative to the amount of ethylene fed, and a comonomer (1-hexene) at 0.9 wt%; after removal of the solvent and drying, a powder-form high-density ethylene/1-hexene copolymer was obtained, which was dry blended to produce a powder-form high-density polyethylene (HDPE, Virgin polyethylene). In this process, the reactor was maintained at 93 °C and at a pressure of 42 kg/cm2. The thus produced polyethylene was melt blended with a polar copolymer, namely an ethylene-vinyl acetate copolymer (EVA, manufactured by LG Chem, product name: ES28005, with 28 wt% VA) in a weight ratio of 90:10 to produce virgin polyethylene, and the specific properties are shown in Table 1 below.

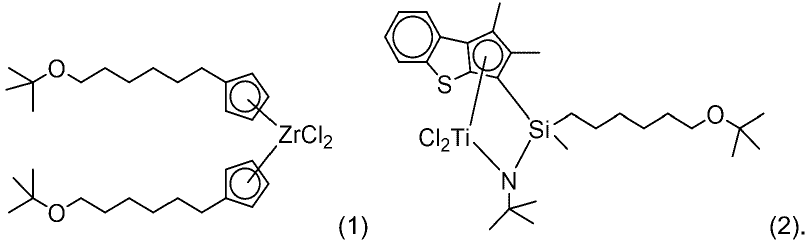

### Example 2: Preparation of polyethylene composition

A polyethylene composition (PCR Compound) was prepared in the same manner as in Example 1, except using a polyethylene resin having the properties shown in Table 1 as the virgin polyethylene, alongside the post-consumer waste polyethylene (PCW PE, Baeksan Natural product of Baeksan Plastic Co.), to produce the polyethylene composition of Example 2.

Here, the virgin polyethylene used was produced in the same manner as in Example 1, except that it was melt blended with the polar copolymer (EVA, ethylene vinyl acetate, manufactured by LG Chem, product name: ES28005) in a weight ratio of 87.5:12.5 to produce virgin polyethylene (HDPE, Virgin polyethylene).

### Comparative Example 1: Preparation of polyethylene composition

A polyethylene composition (PCR Compound) was prepared in the same manner as in Example 1, but using a virgin polyethylene (Virgin PE) with the properties shown in Table 1 along with the post-consumer waste polyethylene (PCW PE, Baeksan Natural product of Baeksan Plastic Co.), the polyethylene composition of Comparative Example 1 was prepared.

Here, the virgin polyethylene used was produced by polymerizing in the same manner as in Example 1, but used as virgin polyethylene without melt blending of the polar copolymer.

### Comparative Example 2: Preparation of polyethylene composition

A polyethylene composition (PCR Compound) was prepared in the same manner as Example 1, except using a polyethylene resin with the properties shown in Table 1 as virgin polyethylene, in combination with the post-consumer waste polyethylene (PCW PE, Baeksan Natural product of Baeksan Plastic Co.), to prepare the polyethylene composition of Comparative Example 2.

Here, the virgin polyethylene was produced in the same manner as Example 1, except that in the polymerization process of the ethylene/1-hexene copolymer, hydrogen was changed to 4.7 g/h, comonomer (1-hexene) was changed to 0.8 wt%, and it was used as virgin polyethylene without melt blending with a polar copolymer.

### Comparative Example 3: Preparation of polyethylene composition

The polyethylene composition (PCR Compound) was prepared using the same method as Example 1, but a polyethylene resin with the properties shown in Table 1 was used as the virgin polyethylene, in conjunction with the post-consumer waste polyethylene (Baeksan Natural product from Baeksan Plastic Co., Ltd.) to prepare the polyethylene composition of Comparative Example 3.

Here, the virgin polyethylene used was prepared the same way as in Example 1, but adjusted with hydrogen at 7.9 g/hr and comonomer (1-hexene) at 2.9 wt% in the polymerization process of the ethylene/1-hexene copolymer without any polar copolymer melt blending.

### Comparative Example 4: Preparation of polyethylene composition

A polyethylene composition (PCR Compound) was prepared in the same manner as in Example 1, but using a polyethylene resin having the properties shown in Table 1 as virgin polyethylene, alongside the post-consumer waste polyethylene (BaekSan Plastic's BaekSan Natural product), to prepare a polyethylene composition of Comparative Example 4.

Here, the virgin polyethylene was prepared in the same manner as in Example 1, but instead of using a polar copolymer (EVA, LG Chem ES28005), a modified polypropylene (manufactured by Lotte Chemical, product name: MB300) was melt blended at a weight ratio of 87.5:12.5 to prepare virgin polyethylene (HDPE, Virgin polyethylene).

### Comparative Example 5: Preparation of polyethylene composition

A polyethylene composition (PCR Compound) was prepared in the same manner as in Example 1, using virgin polyethylene having the properties shown in Table 1, in conjunction with the aforementioned aforementioned post-consumer waste polyethylene (Baeksan Natural product from Baeksan Plastic Co.), to produce a polyethylene composition of Comparative Example 5.

Here, the virgin polyethylene was prepared in the same manner as in Example 1, except that instead of the polar copolymer (EVA, ethylene vinyl acetate, manufactured by LG Chem, product name: ES28005), modified polyethylene (manufactured by Lotte Chemical, product name: TU-300TL) was melt blended in a weight ratio of 87.5:12.5 to prepare virgin polyethylene (HDPE, Virgin polyethylene).

### Comparative Example 6: Preparation of polyethylene composition

A polyethylene composition (PCR Compound) was prepared in the same manner as in Example 1, but using a polyethylene resin with the properties shown in Table 1 as the virgin polyethylene, in conjunction with the post-consumer waste polyethylene (PCW PE, Baeksan Natural product of Baeksan Plastic Co.), to prepare the polyethylene composition of Comparative Example 6.

Here, the virgin polyethylene used was a commercially available high-density polyethylene product (HDPE, manufactured by Lotte Chemical, product name: M7100), used as virgin polyethylene without melt blending with a polar copolymer.

### Comparative Example 7: Preparation of polyethylene composition

A polyethylene composition was prepared in the same manner as Example 1, except a polyethylene resin with properties as shown in Table 1 was used as the virgin polyethylene alongside the post-consumer waste polyethylene (Baeksan Plastic's Baeksan Natural product) to produce the polyethylene composition of Comparative Example 6.

Here, the virgin polyethylene used was a commercially available high-density polyethylene product (HDPE, manufactured by LG Chem, product name: CE2080) used as virgin polyethylene without melt blending with a polar copolymer.

### <Experimental Examples>

The properties of the virgin polyethylene (HDPE, Virgin polyethylene) used in the examples and the polyethylene composition (PCR Compound) thus prepared were evaluated by the following methods, and the measurement results are shown in Table 1 below.

### (1) Density (g/cm³)

The density (g/cm³) of the virgin polyethylene (HDPE, Virgin polyethylene) and the polyethylene composition (PCR Compound) was measured according to ASTM D 1505.

### (2) Weight-average molecular weight, molecular weight distribution (PDI, polydispersity index, Mw/Mn), and the proportion of Log Mw (≥5.5) as determined by GPC analysis

For the virgin polyethylene (HDPE, Virgin polyethylene), the weight-average molecular weight (Mw) and number-average molecular weight (Mn) of the polymer were measured using gel permeation chromatography (GPC, manufactured by Waters), and the molecular weight distribution (PDI, Mw/Mn) was calculated.

Specifically, the GPC apparatus used was a Waters PL-GPC220 system with a Polymer Laboratories PLgel MIX-B column (300 mm in length). The measurement temperature was 160 °C, using 1,2,4-trichlorobenzene as the solvent at a flow rate of 1 mL/min. The polymer samples for both the examples and comparative examples were pretreated by dissolving in 1,2,4-trichlorobenzene containing 0.0125% butylated hydroxytoluene (BHT) at 160 °C for 10 hours to form a concentration of 10 mg/10 mL, and then 200 µL of the solution was injected. The Mw and Mn values were derived using a calibration curve prepared from nine polystyrene standards with weight-average molecular weights of 2,000 g/mol, 10,000 g/mol, 30,000 g/mol, 70,000 g/mol, 200,000 g/mol, 700,000 g/mol, 2,000,000 g/mol, 4,000,000 g/mol, and 10,000,000 g/mol, respectively.

Furthermore, from the GPC analysis, a log (logarithmic) graph of the Mw of the virgin polyethylene (HDPE, Virgin polyethylene) is obtained, that is, a GPC curve graph with the x-axis as log Mw and the y-axis as dw/dlogMw, and the ratio (unit: %) of the integration value of the region where Log Mw is 5.5 or greater to the total integration value (Log Mw ≥5.5) is calculated and shown in Table 1.

### (3) entanglement molecular weight (Me)

For the virgin polyethylene (HDPE, Virgin polyethylene), the entanglement molecular weight (Mₑ, g/mol) was measured using a hybrid rheometer (DHR-2, Discovery Hybrid Rheometer-2) according to Equation 1 below: [Equation 1] ${M}_{e} = ρRT / {{G}^{0}}_{N}$ in Equation 1, G⁰_{N} is the plateau modulus, ρ is the melt density, R is the gas constant, and T is the absolute temperature.

Here, G⁰_{N} is inversely proportional to the intercept of the creep compliance J₀, which can be determined from the following Equation 2: [Equation 2] ${{G}^{0}}_{N} = 6 / \left(5{J}_{0}\right)$ in Equation 2, J₀ is the intercept of the creep compliance.

Also, J₀ is measured using a 25 mm diameter plate in the DHR-2 (TA Instrument) as follows.

For example, under a nitrogen atmosphere at 190 °C, an ethylene (co)polymer sample is melted and placed between 25 mm plates so that its thickness becomes 1 mm. After the temperature has stabilized and the vertical stress due to compression is relieved by waiting for 2 minutes, a shear stress of 10 Pa is applied for 1,000 seconds. After the measurement, a graph is plotted with the creep compliance J (the strain divided by the applied shear stress) on the y-axis and time (t) on the x-axis, and J0 is determined from the tangent of the region where the slope becomes constant.

### (4) drop impact strength

According to ASTM D 1709 and the Dart drop method A, for a disc specimen (diameter 50 mm, thickness 2 mm) of the polyethylene composition, a weight is dropped with a drop energy fixed at 4.2 J until a crack of at least 1 mm in length appears; the number of drops is measured and expressed in Table 1 as the drop impact (number of drops).

Specifically, as described below, a disc is prepared based on the polyethylene composition (PCR Compound) and the number of drops is measured on the disc until a crack occurs within the disc. The number of drops until a crack of at least 1 mm in length occurs is measured.

### 4-1. Preparation of drop impact Disc

- The disc is manufactured using an injection molding machine, setting the temperature gradient to 210-230 °C, and the PCR Compound is injected to produce the disc.
- Disc dimensions (Φ 50 mm, thickness 2 mm).

### 4-2. Drop impact Evaluation

According to ASTM D 1709 and the Dart drop method A, using an Instron 9450 (Impact Drop Tower), the disc is fixed and a weight is dropped to measure the number of drops until a crack develops (with the drop energy fixed at 4.2 J).

### (5) ESCR

According to ASTM D 1693-07, using a 10% Igepal CO-630 Solution at 50 °C under Condition B, the time until the polyethylene composition (PCR Compound) reaches F50 (50% destruction) is measured and expressed in Table 1 as ESCR (hr).

**[Table 1]**

| | Properties of virgin polyethylene | | | Properties of polyethylene composition (PCR product, recycled resin + Virgin Resin) | | |
|---|---|---|---|---|---|---|
| | Density (g/cm³) | LogMw>5.5 (%) | Mₑ (g/mol) | Density (g/cm³) | Drop Impact | ESCR (hr) |
| | | | | | (number of drops | |
| Example 1 | 0.9472 | 14.1 | 9,554 | 0.9495 | 7 | 217 |
| Example 2 | 0.9477 | 14.2 | 9,041 | 0.9497 | 7 | 242 |
| Comparative Example 1 | 0.9474 | 14.3 | 15,574 | 0.9497 | 7 | 107 |
| Comparative Example 2 | 0.9470 | 18.9 | 9,547 | 0.9492 | 4 | 230 |
| Comparative Example 3 | 0.9429 | 10.2 | 9,787 | 0.9469 | 10 | 147 |
| Comparative Example 4 | 0.9425 | 14.0 | 10,105 | 0.9479 | 7 | 140 |
| Comparative Example 5 | 0.9428 | 13.9 | 10,874 | 0.9477 | 7 | 135 |
| Comparative Example 6 | 0.9542 | 20.7 | 9,874 | 0.9541 | 3 | 185 |
| Comparative Example 7 | 0.9580 | 13.2 | 19,687 | 0.9555 | 5 | 53 |

Referring to Table 1, the polyethylene composition of Examples 1 to 2 according to the present disclosure exhibits a reinforced entangled state between the oxidized recycled raw material having polar groups and the nonpolar virgin polyethylene, thereby increasing the density, drop impact strength, and environmental stress crack resistance (ESCR). Accordingly, even though the polyethylene composition of the present disclosure comprises a high amount of post-consumer waste polyethylene (PCW PE) (60 wt%), when used for blow molded containers, it achieves high load-bearing strength with excellent mechanical properties and simultaneously secures excellent processability.

## Claims

1. A polyethylene composition comprising virgin polyethylene and post-consumer waste polyethylene (PCW PE), wherein the polyethylene composition satisfies the following (a) to (c):
(a) a density of at least 0.949 g/cm³;
(b) a dart drop impact strength of at least 7 drops, as measured in accordance with Dart Drop Method A of ASTM D 1709 by dropping a weight onto a disc specimen of the polyethylene composition having a diameter of 50 mm and a thickness of 2 mm at a fixed drop energy of 4.2 J, and measuring the number of drops before occurrence of a crack having a length of 1 mm or more; and
(c) an environmental stress crack resistance (ESCR) of at least 200 hours, which is measured according to ASTM D 1693 under Condition B, F50, Igepal 10%.

2. The polyethylene composition of Claim 1, wherein the polyethylene composition has a density of 0.949 g/cm³ or more to 0.954 g/cm³ or less.

3. The polyethylene composition of Claim 1, wherein the polyethylene composition has a dart drop impact strength of 7 drops or more to 30 drops or less.

4. The polyethylene composition of Claim 1, wherein the polyethylene composition has an environmental stress crack resistance (ESCR) of 200 hours or more to 500 hours or less.

5. The polyethylene composition of Claim 1, wherein the polyethylene composition has a melt index MI_{2.16} measured according to ASTM D 1238 at 190 °C under a 2.16 kg load of 0.25 g/10 min or more to 0.8 g/10 min or less.

6. The polyethylene composition of Claim 1, wherein the virgin polyethylene is one or more selected from the group consisting of an ethylene homopolymer and an ethylene/α-olefin copolymer.

7. The polyethylene composition of Claim 6, wherein the α-olefin is one or more selected from the group consisting of 1-butene, 1-pentene, 1-hexene, 4-methyl-1-pentene, 1-octene, 1-decene, 1-dodecene, 1-tetradecene, 1-hexadecene, 1-octadecene, 1-eicosene, and mixtures thereof.

8. The polyethylene composition of Claim 6, wherein the virgin polyethylene further comprises at least one polar copolymer comprising ethylene, and
wherein the polar copolymer comprises at least one polar functional group selected from the group consisting of a carboxyl group, a hydroxy group, a carbonyl group, a nitrile group, and an amide group.

9. The polyethylene composition of Claim 8, wherein the polar copolymer has a polar functional group content of 20 wt% or more to 50 wt% or less, based on the total weight of the polar copolymer.

10. The polyethylene composition of Claim 8, wherein the polar copolymer is an ethylene-vinyl acetate copolymer.

11. The polyethylene composition of Claim 8, wherein the weight ratio of the total weight of one or more of the ethylene homopolymer and the ethylene/α-olefin copolymer to the total weight of the one or more polar copolymers is from 70:30 to 99:1.
The polyethylene composition of Claim 8, wherein the virgin polyethylene has a ratio of a total weight of one or more of an ethylene homopolymer and an ethylene/α-olefin copolymer to a total weight of one or more polar copolymers of 70:30 to 99:1.

12. The polyethylene composition of Claim 1, wherein the virgin polyethylene has a density of 0.944 g/cm³ or more.

13. The polyethylene composition of Claim 1, wherein in a GPC curve graph of the virgin polyethylene with the x-axis as log Mw and the y-axis as dw/dlogMw, the integration value for the region where Log Mw is 5.5 or greater is 15% or less of the total integration value.

14. The polyethylene composition of Claim 1, wherein the virgin polyethylene has an entanglement molecular weight (Mₑ) of less than 10000 g/mol.

15. The polyethylene composition of Claim 1, wherein the composition comprises from 10 wt% or more to 90 wt% or less of the post-consumer waste polyethylene (PCW PE).

16. The polyethylene composition of Claim 1, wherein the post-consumer waste polyethylene (PCW PE) has a melt index MI_{2.16} measured according to ASTM D 1238 at 190 °C under a 2.16 kg load of 0.15 g/10 min or more to 0.2 g/10 min or less.

17. The polyethylene composition of Claim 1, wherein the post-consumer waste polyethylene (PCW PE) has a density of 0.951 g/cm³ or more to 0.953 g/cm³ or less.

18. The polyethylene composition of Claim 1, wherein the post-consumer waste polyethylene (PCW PE) has an environmental stress crack resistance (ESCR) of 40 hours or more to 50 hours or less, as measured according to ASTM D 1693 under Condition B, F50, Igepal 10%.
